# EUROPEAN PATENT APPLICATION

(11) **EP 4 726 514 A1**
(43) Date of publication of application: **15.04.2026**
(21) Application number: 24864290.2
(22) Date of filing: 24.07.2024
(51) Int. Cl.: G06F 3/0484

(54) **REFRESH RATE SWITCHING METHOD AND RELATED APPARATUS**

(30) Priority: 11.09.2023 CN 202311170463
(71) Applicant: Honor Device Co., Ltd., Shenzhen, Guangdong 518040 (CN)
(72) Inventor: HUANG, Bangbang, Shenzhen, Guangdong 518040 (CN); LIU, Chengxin, Shenzhen, Guangdong 518040 (CN)
(74) Representative: Goddar, Heinz J.
(86) International application number: PCT/CN2024/107355
(87) International publication number: WO 2025/055567

(57) **Abstract**

Embodiments of this application provide a refresh rate switching method and a related apparatus, applied to the field of terminal technologies. The method includes: displaying an application interface of a first application at a first refresh rate; detecting a sliding operation of a user on the application interface; and refreshing the application interface of the first application based on the sliding operation, where when a sliding speed of the sliding operation is a first speed, a refresh rate of a display screen is a second refresh rate; or when a sliding speed is a second speed, a refresh rate of the display screen is a third refresh rate; and the first speed is less than the second speed, and the second refresh rate is less than the third refresh rate. In this case, the refresh rate is adjusted in real time based on the sliding operation, so that a requirement for display smoothness at a high sliding speed can be met, and power consumption at a low sliding speed can further be reduced.

## Description

This application claims priority to Chinese Patent Application No. 202311170463.8, filed with the China National Intellectual Property Administration on September 11, 2023 and entitled "REFRESH RATE SWITCHING METHOD AND RELATED APPARATUS", which is incorporated herein by reference in its entirety.

### TECHNICAL FIELD

This application relates to the field of terminal technologies, and in particular, to a refresh rate switching method and a related apparatus.

### BACKGROUND

Currently, a user may view various types of content by using a display screen of an electronic device. When there is a lot of content, the display screen cannot display all content at a time. The user may control, through a sliding operation, the display screen to slide and display related content. However, when sliding and displaying the related content, the electronic device keeps a high refresh rate. Consequently, power consumption of the electronic device is high.

### SUMMARY

Embodiments of this application provide a refresh rate switching method and a related apparatus, applied to the field of terminal technologies. A refresh rate of an electronic device is adjusted based on a real-time speed of a sliding operation. When the real-time speed is relatively high, the refresh rate is relatively high; or when the real-time speed is relatively low, the refresh rate is relatively low. In this case, the refresh rate is adjusted in real time, so that a requirement for display smoothness at a high real-time speed can be met, and power consumption at a low real-time speed can further be reduced.

According to a first aspect, an embodiment of this application proposes a refresh rate switching method. The method includes: displaying an application interface of a first application at a first refresh rate; detecting a sliding operation of a user on the application interface; and refreshing the application interface of the first application based on the sliding operation, where when a sliding speed of the sliding operation is a first speed, a refresh rate of a display screen is a second refresh rate; or when a sliding speed is a second speed, a refresh rate of the display screen is a third refresh rate; and the first speed is less than the second speed, and the second refresh rate is less than the third refresh rate.

When the sliding speed is relatively high, the refresh rate is relatively high. When the sliding speed is relatively low, the refresh rate is relatively low. In this case, the refresh rate is adjusted in real time, so that a requirement for display smoothness at a high sliding speed can be met, and power consumption at a low sliding speed can further be reduced.

Optionally, the refreshing the application interface of the first application based on the sliding operation includes: determining, based on the sliding speed, a first target refresh rate corresponding to the sliding speed; and refreshing, by the display screen, the application interface of the first application at the first target refresh rate.

In this case, an instantaneous speed of the sliding operation is calculated to adjust the refresh rate, and the refresh rate matches the instantaneous speed, thereby improving user experience.

Optionally, before the determining a first target refresh rate, the method further includes: detecting a plurality of move events corresponding to the sliding operation; and determining the sliding speed based on location information and time information of the plurality of move events.

In this case, a sliding speed of non-hand-off sliding is determined based on an input event (a reported point) corresponding to the sliding operation, so that a change in the sliding operation can be accurately reflected and then the refresh rate is accurately adjusted.

Optionally, the determining the sliding speed based on location information and time information of the plurality of move events includes: determining the first speed based on location information and time information of M move events detected within a first time period; and determining the second speed based on location information and time information of N move events detected within a second time period, where both M and N are integers greater than a preset threshold; and a time interval between a last moment in the first time period and a last moment in the second time period is greater than preset duration. Location information may be coordinates corresponding to a move event. Time information may be a moment of a detected move event.

The preset threshold may be 10, 5, or any value. This is not limited herein.

In this case, the refresh rate is adjusted twice at a time interval, so that a quantity of times of switching the refresh rate can be reduced, and the refresh rate can be less frequently switched.

Optionally, the preset duration is first duration when the second refresh rate is a first value; or the preset duration is second duration when the second refresh rate is a second value, where the first value is greater than the second value, and the first duration is greater than the second duration.

In this case, the refresh rate is adjusted in a slow reducing and fast increasing manner. When the refresh rate is relatively low, the electronic device may increase the refresh rate in time, to meet a requirement for display smoothness. When the refresh rate is relatively high, the refresh rate may be slowly reduced, to reduce power consumption of the electronic device.

Optionally, the method further includes: displaying the application interface of the first application at a fourth refresh rate when a down event corresponding to the sliding operation is detected.

The fourth refresh rate may be a preset refresh rate, such as 60 Hz or 90 Hz. This is not limited herein.

In this case, after a user operation is received, the fourth refresh rate is adjusted to a higher refresh rate, to facilitate subsequent display based on the user operation and improve display smoothness.

Optionally, the method further includes: detecting an up event corresponding to the sliding operation; determining a second target refresh rate based on a speed corresponding to the up event; and refreshing, by the display screen, the application interface of the first application at the second target refresh rate.

In this case, after the sliding operation is stopped, the refresh rate is adjusted based on the speed corresponding to the up event.

Optionally, refreshing and displaying, by the display screen, the application interface at the first refresh rate when the speed corresponding to the up event is less than or equal to a speed threshold; or refreshing and displaying, by the display screen, the application interface at a fifth refresh rate when the speed corresponding to the up event is greater than a speed threshold, where the fifth refresh rate corresponding to the speed corresponding to the up event.

The speed threshold may correspond to the following second threshold.

In this case, hand-off sliding is entered when the speed of the up event is relatively high; and sliding is stopped when the speed of the up event is relatively low.

Optionally, the speed corresponding to the up event is greater than the speed threshold; and the fifth refresh rate is a first value when the speed corresponding to the up event is a third speed; or the fifth refresh rate is a second value when the speed corresponding to the up event is a fourth speed, where the third speed is less than the fourth speed, and the first value is less than or equal to the second value.

In this case, a higher speed corresponding to the up event leads to a higher fifth refresh rate, thereby meeting a requirement for display smoothness during the hand-off sliding.

Optionally, the first application includes: a system application and a third-party application.

The system application includes: a desktop application. The third-party application includes: a video application, a chat application, a map application, and the like.

According to a second aspect, an embodiment of this application proposes a refresh rate switching method. The method includes: displaying an application interface of a first application at a first refresh rate; detecting a sliding operation of a user on the application interface; when a down event corresponding to the sliding operation is detected, switching a refresh rate of the display screen from the first refresh rate to a second refresh rate, and displaying the application interface of the first application at the second refresh rate; when a plurality of move event corresponding to the sliding operation is detected, switching a refresh rate of the display screen from the second refresh rate to a third refresh rate, and displaying the application interface of the first application at the third refresh rate; when it is detected that a sliding speed is a second speed, switching a refresh rate of the display screen from the third refresh rate to a fourth refresh rate, and displaying the application interface of the first application at the fourth refresh rate; and when an up event corresponding to the sliding operation is detected, switching a refresh rate of the display screen from the fourth refresh rate to a fifth refresh rate, and displaying the application interface of the first application at the fifth refresh rate.

When the first speed is less than the second speed, the third refresh rate is less than the fourth refresh rate, or when the first speed is greater than the second speed, the third refresh rate is greater than the fourth refresh rate.

The refresh rate is adjusted in time based on the sliding speed of the sliding operation. When the sliding speed is relatively high, the refresh rate is relatively high. When the sliding speed is relatively low, the refresh rate is relatively low. In this case, the refresh rate is adjusted in real time, so that a requirement for display smoothness at a high sliding speed can be met, and power consumption at a low sliding speed can further be reduced.

Optionally, a speed corresponding to the up event is less than or equal to a speed threshold, and the fifth refresh rate is the same as the first refresh rate.

In this case, sliding is stopped when the speed corresponding to the up event is relatively low, and refresh rates used before and after the sliding operation keep consistent.

Optionally, a speed corresponding to the up event is greater than a speed threshold; and the fifth refresh rate is a first value when the speed corresponding to the up event is a third speed; or the fifth refresh rate is a second value when the speed corresponding to the up event is a fourth speed, where the third speed is less than the fourth speed, and the first value is less than or equal to the second value.

In this case, hand-off sliding is started when the speed of the up event is relatively high, and the speed of the up event keeps consistent with a speed of the hand-off sliding. A higher speed corresponding to the up event leads to a higher refresh rate, thereby meeting a requirement for display smoothness during hand-off sliding.

Optionally, the sliding operation correspond to a plurality of move events, and the method further includes: determining, based on location information and time information that correspond to a first move event, and location information and time information that correspond to a move event previous to the first move event, that the speed of the sliding operation is the first speed, where the first move event is a corresponding move event used when it is detected that a type of the sliding operation is sliding, or a move event performed after it is detected that a type of the sliding operation is sliding.

In this case, when the electronic device detects that a user operation is sliding, a sliding speed of non-hand-off sliding is determined based on an input event (a reported point) corresponding to the sliding operation, thereby accurately adjusting the refresh rate.

Optionally, determining, based on location information and time information that correspond to a second move event, and location information and time information that correspond to a move event previous to the second move event, that the speed of the sliding operation is the second speed, where a time interval between the second move event and the first move event is greater than preset duration.

In this case, the refresh rate is adjusted twice at a time interval, so that a quantity of times of switching the refresh rate can be reduced, and the refresh rate can be less frequently switched.

Optionally, the first move event is a corresponding move event used when it is detected that a user operation is a sliding operation, or a move event performed after it is detected that a user operation is a sliding operation; and the second move event is a move event after preset duration of the first move event.

Optionally, the preset duration is first duration when the third refresh rate is a first value; or the preset duration is second duration when the third refresh rate is a second value, where the first value is greater than the second value, and the first duration is greater than the second duration.

In this case, the refresh rate is adjusted in a slow reducing and fast increasing manner. When the refresh rate is relatively low, the electronic device may increase the refresh rate in time, to meet a requirement for display smoothness. When the refresh rate is relatively high, the refresh rate may be slowly reduced, to reduce power consumption of the electronic device.

Optionally, the first refresh rate is 10 Hz, the second refresh rate is 60 Hz, the third refresh rate is 120 Hz, the fourth refresh rate is 60 Hz, and the fifth refresh rate is 40 Hz.

Optionally, the first speed falls within a first speed range, and the second speed falls within a second speed range; and the first speed range is different from the second speed range, and the third refresh rate is less than the fourth refresh rate.

In this case, it is convenient to confirm the refresh rate based on the speed, and the implementation is simple.

Optionally, the first application includes: a system application and a third-party application.

According to a third aspect, an embodiment of this application provides an electronic device. The electronic device may alternatively be referred to as a terminal (terminal), user equipment (user equipment, UE), a mobile station (mobile station, MS), a mobile terminal (mobile terminal, MT), or the like. The electronic device may be a mobile phone (mobile phone), a smart TV, a wearable device, a tablet computer (Pad), a computer having a wireless transmission and receiving function, a virtual reality (virtual reality, VR) electronic device, an augmented reality (augmented reality, AR) electronic device, a wireless terminal related to industrial control (industrial control), a wireless terminal related to self-driving (self-driving), a wireless terminal related to remote medical surgery (remote medical surgery), a wireless terminal related to a smart grid (smart grid), a wireless terminal related to transportation safety (transportation safety), a wireless terminal related to a smart city (smart city), a wireless terminal related to a smart home (smart home), or the like.

The electronic device includes: a processor and a memory, where the memory stores computer-executable instructions; and the processor executes the computer-executable instructions stored in the memory, to enable the electronic device to perform the method according to the first aspect or the method according to the second aspect.

According to a fourth aspect, an embodiment of this application provides a computer-readable storage medium, where the computer-readable storage medium stores a computer program. The computer program, when executed by a processor, implements the method according to the third aspect or the method according to the fourth aspect.

According to a fifth aspect, an embodiment of this application provides a computer program product. The computer program product includes a computer program. The computer program, when being run, enables a computer to perform the method according to the first aspect or the method according to the second aspect.

According to a sixth aspect, an embodiment of this application provides a chip. The chip includes a processor. The processor is configured to invoke a computer program in a memory, to perform the method according to the first aspect or the method according to the second aspect.

It should be understood that the technical solutions of the third aspect to the sixth aspect in this application correspond to the technical solution of the first aspect or the second aspect in this application, and beneficial effects achieved by the aspects and corresponding feasible implementations are similar. Details are not described herein again.

### BRIEF DESCRIPTION OF DRAWINGS

FIG. 1A is a schematic diagram of a sliding operation detected by an electronic device in a possible design;
FIG. 1B is a schematic diagram of a click operation detected by an electronic device in a possible design;
FIG. 2 is a schematic diagram of a software framework of an electronic device according to an embodiment of this application;
FIG. 3A, FIG. 3B, FIG. 3C, FIG. 3D, FIG. 3E, and FIG. 3F are schematic diagrams of application scenarios according to an embodiment of this application;
FIG. 4 is a schematic flowchart of a refresh rate switching method according to an embodiment of this application;
FIG. 5 is a schematic diagram of a sliding operation detected by an electronic device according to an embodiment of this application;
FIG. 6 is a schematic flowchart of a refresh rate switching method according to an embodiment of this application;
FIG. 7 is a schematic diagram of an interaction between internal modules in a sliding operation scenario according to an embodiment of this application;
FIG. 8A is a schematic diagram of a sliding operation detected by an electronic device according to an embodiment of this application;
FIG. 8B is a schematic diagram of an interface of an electronic device according to an embodiment of this application;
FIG. 9 is a schematic diagram of an interaction between internal modules according to an embodiment of this application;
FIG. 10 is a schematic diagram of a click operation detected by an electronic device according to an embodiment of this application; and
FIG. 11 is a schematic diagram of a structure of an electronic device according to an embodiment of this application.

### DESCRIPTION OF EMBODIMENTS

To facilitate clear descriptions of technical solutions of embodiments of this application, the following briefly introduces some terms and technologies involved in embodiments of this application:
1. Frame: The frame is a smallest unit of a single picture in an interface display. A frame may be understood as a still picture, and displaying a plurality of consecutive frames in rapid succession may form a false phenomenon of motion of an object. A frame rate refers to a frame number that refreshes the picture in 1 second, or may be understood as a quantity of times a graphics processing unit refreshes the picture per second in an electronic device. A smoother and more realistic animation may be obtained at a high frame rate. More frames per second indicate a smoother displayed action.

It should be noted that drawing, rendering, composition, and other processes need to be performed before an interface displays a frame.
2. Frame drawing: The frame drawing is image drawing on a display interface. The display interface may include one or more views. Each view may be drawn by a visual control of a view system. Each view includes sub-views. One sub-view corresponds to one part in the view. For example, one sub-view corresponds to one symbol in an image view.
3. Frame rendering: The frame rendering is performing a coloring operation on or adding a 3D effect to a drawn view. For example, the 3D effect may be a light effect, a shadow effect, a texture effect, or the like.
4. Frame composition: The frame composition is a process of compositing one or more rendered views into a display interface.
5. Non-hand-off sliding: The non-hand-off sliding is sliding display on an interface of the electronic device based on a sliding operation.

For example, in an application such as settings or headlines, the interface displays a list layout, and the non-hand-off sliding refers to a process of displaying the interface based on finger sliding by a user.

It may be understood that when the interface includes a list control, the interface displays the list layout that is a list interface. The list control may be a listview or a recyleview, and is not limited in embodiments of this application.

### 6. Other terms

In embodiments of this application, words such as "first" and "second" are used to distinguish between same or similar items with a basically same function and role. For example, a first chip and a second chip are merely used to distinguish between different chips, and are not intended to limit a sequence thereof. A person skilled in the art may understand that the words such as "first" and "second" do not limit a quantity or an execution sequence, and the words such as "first" and "second" do not indicate a definite difference.

It should be noted that, in embodiments of this application, words such as "exemplary" or "for example" are used to indicate an example, an instance, or descriptions. Any embodiment or design solution described as an "example" or "for example" in this application should not be construed as being more preferred or more advantageous than another embodiment or design solution. To be precise, use of the term such as "exemplary" or "for example" is intended to specifically present a related concept.

In embodiments of this application, "at least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of the items, including a singular item (piece) or any combination of a plurality of items (pieces). For example, at least one of a, b, or c may represent: a, b, c, a-b, a-c, b-c, or a-b-c, where a, b, and c may be singular or plural.

In embodiments of this application, "when... " may be an instantaneous occurrence time of a case, or may be a time period after occurrence of a case. This is not specifically limited in embodiments of this application. In addition, an interface of an electronic device provided in embodiments of this application is only used as an example, and the interface may further include more or less content.

### 7. Electronic device

The electronic device in embodiments of this application may be in any form. For example, the electronic device may include a handheld device or an in-vehicle device having a display function. For example, some electronic devices are a mobile phone (mobile phone), a tablet computer, a palmtop computer, a notebook computer, a mobile Internet device (mobile Internet device, MID), a wearable device, a virtual reality (virtual reality, VR) device, an augmented reality (augmented reality, AR) device, a wireless terminal related to industrial control (industrial control), a wireless terminal related to self-driving (self-driving), a wireless terminal related to a remote medical surgery (remote medical surgery), a wireless terminal related to a smart grid (smart grid), a wireless terminal related to transportation safety (transportation safety), a wireless terminal related to a smart city (smart city), a wireless terminal related to a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, an electronic device in a 5G network, an electronic device in a future evolved public land mobile network (public land mobile network, PLMN), and the like. This is not limited in embodiments of this application.

As an example rather than a limitation, in embodiments of this application, the electronic device may alternatively be a wearable device. The wearable device may alternatively be referred to as a wearable intelligent device, and is a collective term for wearable devices that are intelligently designed and developed for daily wear by using a wearable technology, for example, glasses, gloves, watches, clothes, and shoes. The wearable device is a portable device that is directly worn on a human body or integrated into clothing or an accessory of a user. The wearable device is not merely a hardware device, but implements powerful functions through software support, a data exchange, and a cloud interaction. In a broad sense, the smart wearable device includes full-featured and large-size devices that can implement complete or partial functions without depending on smartphones, such as smart watches or smart glasses, and include devices that focus on a specific type of application function and need to be used together with other devices such as smartphones, for example, various smart bands or smart jewelry for monitoring physical signs.

In addition, in embodiments of this application, the electronic device may alternatively be an electronic device in an Internet of things (Internet of things, IoT) system. The IoT is an important part of future information technology development. A main technical feature of the IoT is to connect an object to a network by using a communication technology, to implement an intelligent network with a man-machine interconnection and an object interconnection.

The electronic device in embodiments of this application may alternatively be referred to as: an electronic device, user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

In embodiments of this application, the electronic device or each network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a windows operating system. The application layer includes applications such as a browser, an address book, word processing software, and instant messaging software.

Currently, a user may view various types of content by using a display screen of an electronic device. When there is a lot of content, the display screen cannot display all content at a time. The user may control, through a sliding operation, the display screen to slide and display related content.

In a possible design, when the electronic device receives the sliding operation or a click operation, the electronic device performs an adjustment from a relatively low refresh rate to a relatively high refresh rate. For example, an example in which the electronic device displays a setting interface is used. When the electronic device receives a sliding operation, the electronic device performs refreshing and display at a rate of 120 Hz.

It should be noted that a type of an input event detected by the electronic device includes: pressing (down), moving (move), and lifting (up). A down event is an input event that is in a user operation and that the electronic device detects pressing for the first time. A move event is an input event of detecting pressing other than the input event of detecting pressing for the first time. An up event is an input event that the electronic device detects that the pressing disappears.

During a period when the electronic device receives a sliding operation from a user, detected input events include: a down event, a series of move events, and an up event. During a period when the electronic device receives a click operation from the user, detected input events include: a down event and an up event. During the period when the electronic device receives the click operation from the user, the detected input events may further include: a move event.

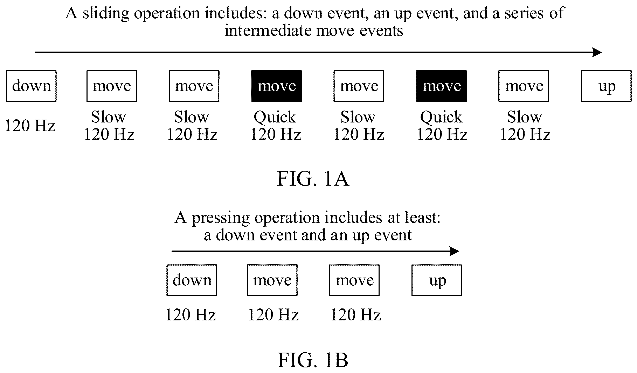

For example, FIG. 1A is a schematic diagram of a sliding operation detected by an electronic device. As shown in FIG. 1A, when the electronic device receives the sliding operation, the electronic device displays, based on 120 Hz, an interface corresponding to the sliding operation.

Specifically, when receiving a down event, the electronic device adjusts a refresh rate to 120 Hz; and when receiving a move event, the electronic device continues to perform refreshing and display at 120 Hz, until an up event is received. After the up event, the display of the electronic device is related to content displayed subsequently. This is not limited herein.

It can be seen from FIG. 1A that, after receiving the down event, the electronic device performs refreshing and display at a relatively high refresh rate. For example, during non-hand-off sliding, a refresh rate of the electronic device is irrelated to a speed corresponding to a move event, and refreshing and display are performed at a relatively high refresh rate. However, this increases power consumption of the electronic device.

A click operation is similar to the sliding operation. Therefore, in a possible design, when receiving the click operation, the electronic device may alternatively perform refreshing and display at a relatively high refresh rate.

For example, FIG. 1B is a schematic diagram of a click operation detected by an electronic device. As shown in FIG. 1B, when the electronic device receives the click operation, the electronic device displays, based on 120 Hz, an interface corresponding to the click operation. It can be seen from FIG. 1B that, compared with the sliding operation shown in FIG. 1A, the click operation includes fewer move events. In some embodiments, the click operation may include no move event.

The click operation is similar to the sliding operation. Therefore, when receiving a down event, the electronic device adjusts a refresh rate to 120 Hz; and when receiving a move event, the electronic device continues to perform refreshing and display at 120 Hz, until an up event is received. After the up event, the display of the electronic device is related to content displayed subsequently. This is not limited herein. In FIG. 1B, after receiving the down event, the electronic device performs refreshing and display at a relatively high refresh rate. However, this increases power consumption of the electronic device.

It can be seen from FIG. 1A and FIG. 1B that, after receiving the down event, the electronic device performs refreshing and display at a relatively high refresh rate. For example, during non-hand-off sliding, a refresh rate of the electronic device is irrelated to a speed corresponding to a move event, and refreshing and display are performed at the relatively high refresh rate, so that power consumption of the electronic device is high.

In view of this, an embodiment of this application provides a refresh rate switching method and a related apparatus. A real-time speed of non-hand-off sliding is determined based on an input event (a reported point) corresponding to a sliding operation, and a refresh rate of an electronic device is adjusted based on the real-time speed. When the real-time speed is relatively high, the refresh rate is relatively high. When the real-time speed is relatively low, the refresh rate is relatively low. In this case, the refresh rate is adjusted in real time, so that a requirement for display smoothness at a high real-time speed can be met, and power consumption at a low real-time speed can further be reduced.

The following describes the technical solutions of this application and how to resolve the foregoing technical problems according to the technical solutions of this application in detail by using specific embodiments. The following specific embodiments may be independently implemented, and may alternatively be combined with each other, and the same or similar concepts or processes may not be described repeatedly in some embodiments.

To facilitate understanding, the following describes a software architecture of an electronic device and an application scenario provided in embodiments of this application with reference to the accompanying drawings.

A software system of the electronic device may use a layered architecture, an event-driven architecture, a micro core architecture, a micro service architecture, a cloud architecture, or the like. In this embodiment of this application, an Android system with the layered architecture is used as an example to describe a software structure of the electronic device.

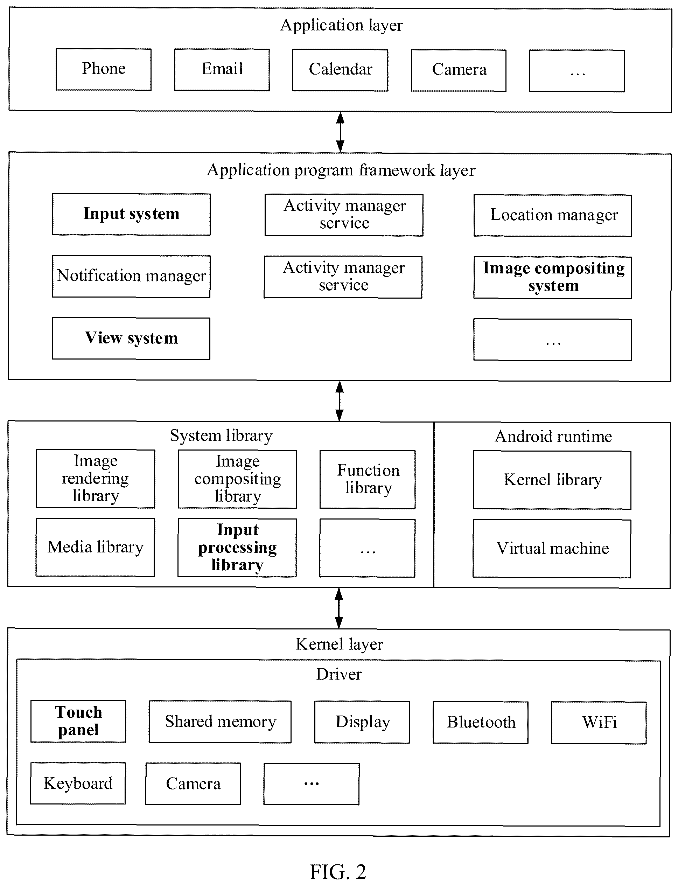

For example, FIG. 2 is a schematic diagram of a software framework of an electronic device according to an embodiment of this application. As shown in FIG. 2, a layered architecture divides software into several layers, and each layer has a clear role and task. The layers communicate with each other by using a software interface. In some embodiments, the Android system is divided into four layers, namely, an application layer, an application program framework layer, an Android runtime (Android runtime) and system library, and a kernel layer from top to bottom.

The application layer may include a series of application program packages. As shown in FIG. 2, the application program package may include application programs such as Phone, Email, Calendar, and Camera.

The application program framework layer provides an application programming interface (application programming interface, API) and a programming framework for the application program at the application layer. The application program framework layer includes some predefined functions.

As shown in FIG. 2, the application program framework layer may include an input system (input dispatcher), an activity manager service, a location manager, a notification manager, an activity manager service, an image compositing system (surface flinger), a view system, and the like.

The input system is configured to manage a program of an input device. For example, the input system may determine input operations such as a mouse click operation, a keyboard input operation, and touch sliding. In this embodiment of this application, the input system is further configured to determine a refresh rate based on a real-time speed corresponding to a sliding operation and transmit the refresh rate to the image compositing system, to adjust the refresh rate of the electronic device.

The activity manager service is configured to manage a lifecycle of each application program and a navigation rollback function. The activity manager service is responsible for constructing a main Android thread, and maintenance of the lifecycle of each application program.

The location manager is configured to provide location services for an application program, including querying for a previous known location, registering and deregistering a periodic location update, and the like.

The notification manager enables the application program to display notification information in a status bar. The notification information may be used for conveying a notification-type message that may disappear automatically after a short time period without a user interaction. For example, the notification manager is configured to notify download completion, provide a message reminder, and the like. The notification manager may alternatively be a notification that appears in a top status bar of a system in a form of a graph or a scroll bar text, for example, a notification of an application program running in the background, or a notification that appears on a screen in a form of a dialog window. For example, text information is prompted in the status bar, an alert tone is produced, the electronic device vibrates, or an indicator light flickers.

The activity manager service (activity manager service, AMS) is configured to manage the lifecycle of each application program and the navigation fallback function. The activity manager service is responsible for constructing a main Android thread, and maintenance of the lifecycle of each application program.

The image compositing system is configured to control image compositing and to generate a vertical synchronization (Vsync) signal. The image compositing system includes: a compositing thread, a Vsync thread, and a quene buffer (quene buffer) thread. The compositing thread is configured to be awakened by a Vsync signal for composition. The Vsync thread is configured to generate a next Vsync signal based on the Vsync signal. The queue buffer thread is configured to store a buffer, generate a Vsync signal request, and wake up the compositing thread.

The view system includes visual controls, such as a text display control and an image display control. The view system may be configured to construct an application program. A display interface may include one or more views. For example, a display interface including a short message service message notification icon may include a text display view and an image display view.

The Android runtime includes a kernel library and a virtual machine. The Android runtime is responsible for scheduling and managing the Android system.

The kernel library includes two parts: One part is a functional function that needs to be invoked by a Java language, and the other part is a kernel library of Android.

The application layer and the application program framework layer run in the virtual machine. The virtual machine executes Java files of the application layer and the application program framework layer as binary files. The virtual machine is used to execute functions such as object lifecycle management, stack management, thread management, security and exception management, and garbage collection.

The system library may include a plurality of functional modules, for example, an image rendering library, an image compositing library, a function library, a media library, and an input processing library. The image rendering library is configured to render a two-dimensional or three-dimensional image. The image compositing library is configured to composite two-dimensional or three-dimensional images.

In a possible implementation, an application renders an image by using the image rendering library, and then the application transmits the rendered image to a buffer queue of the image compositing system. Whenever the Vsync signal arrives, the image compositing system (for example, surface flinger) sequentially obtains a frame of images to be composited from the buffer queue, and then composite the image by using the image compositing library.

The function library provides macros, type definitions, string manipulation functions, mathematical computation functions, input and output functions, and the like used in C language.

The media library supports playing and recording of a plurality of commonly used audio and video formats, static image files, and the like. The media library supports a plurality of audio/video encoding formats, such as MPEG4, H.264, MP3, AAC, AMR, JPG, and PNG.

The input processing library is configured to process a library of an input device, which can realize mouse, keyboard and touch input processing, and the like.

The core layer is a layer between hardware and software. The kernel layer at least includes a touch panel (touch panel, TP) driver, a display driver, a Bluetooth driver, a WIFI driver, a keyboard driver, a shared memory driver, a camera driver and the like. The hardware may be an audio device, a Bluetooth device, a camera device, a sensor device, and the like.

With reference to a scenario in which an application program starts or interface switching occurs in an application program, the following exemplarily describes a working procedure of software and hardware of the electronic device.

The kernel layer processes a touch operation into an original input event (including information such as touch coordinates, touch strength, and a timestamp of the touch operation) when a touch sensor in the touch panel receives the touch operation. The original input event is stored at the kernel layer. The kernel layer reports the original input event to the input system of the application program framework layer through the input processing library. The input system of the application program framework layer parses information (including an operation type, a timestamp, a reported point location, and the like) about the original input event, determines a focus application based on a current focus, and transmits parsed information to the focus application. A focus may be a touch point in the touch operation or a click location in the mouse click operation. The focus application is an application running in a foreground of the electronic device or an application corresponding to a touch location of the touch operation. The focus application determines, based on the parsed information (for example, the reported point location) of the original input event, a control corresponding to the original input event.

That the touch operation is a touch sliding operation, and a control corresponding to the touch sliding operation is a list control of a WeChat application is used as an example. The WeChat application invokes, by using the view system of the application program framework layer, the image rendering library in the system library to draw and render an image. The WeChat application transmits a drawn and rendered image to a buffer queue of the image compositing system. Drawn and rendered images in the image compositing system is composited into a WeChat interface by using the image compositing library in the system library. With the display driver of the kernel layer, the image compositing system enables a screen (a display screen) to display the corresponding interface of the WeChat application.

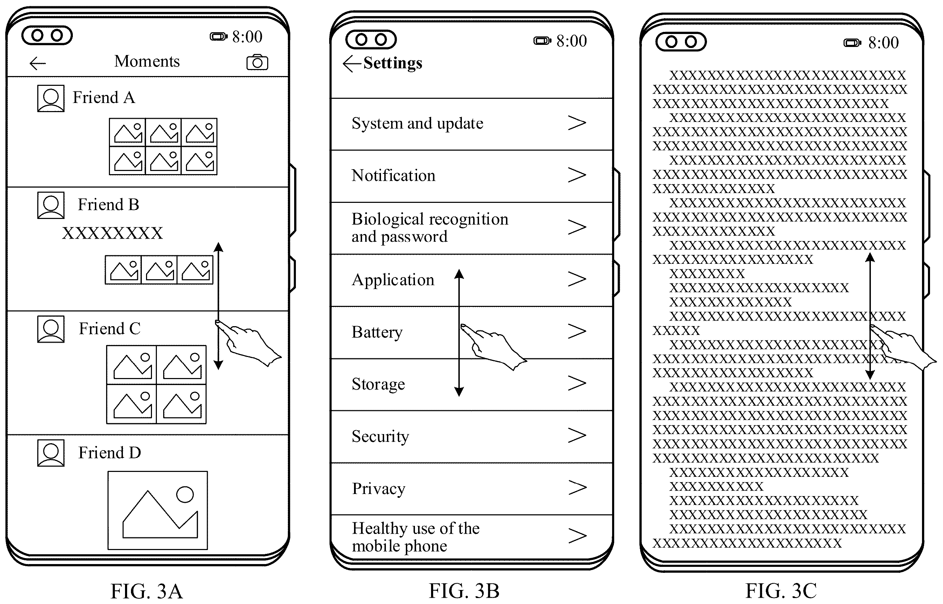

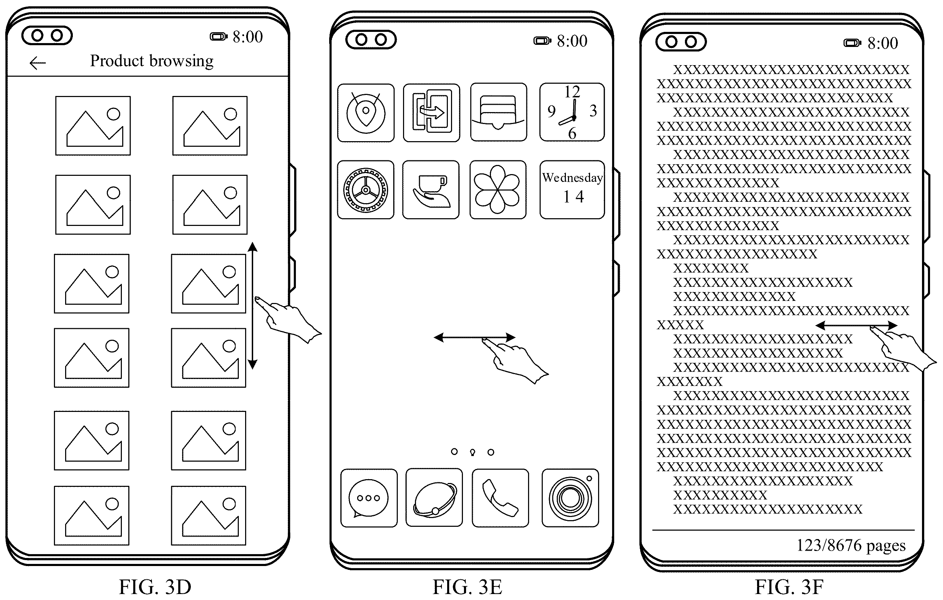

The following describes an application scenario provided in embodiments of this application with reference to the accompanying drawings. FIG. 3A, FIG. 3B, FIG. 3C, FIG. 3D, FIG. 3E, and FIG. 3F are schematic diagrams of application scenarios according to an embodiment of this application.

An electronic device may receive an upward sliding operation or a downward sliding operation of a user in an interface of a social application shown in FIG. 3A, an interface of a setting application shown in FIG. 3B, a document interface shown in FIG. 3C, a product browsing interface shown in FIG. 3D, and the like. The electronic device may further receive a left sliding operation or a right sliding operation of the user in an interface shown in FIG. 3E, an ebook interface shown in FIG. 3F, and the like. When the electronic device receives a sliding operation of the user, the electronic device performs frame drawing, rendering, compositing, and other processes based on the sliding operation, and displays content corresponding to the sliding operation.

It may be understood that, interfaces such as the interface of the social application shown in FIG. 3A, the interface of the setting application shown in FIG. 3B, and the document interface shown in FIG. 3C are merely used as examples. A method in embodiments of this application may further be applied to a scenario in which the electronic device displays an interface of a news application, a scenario in which the electronic device displays a video application, or a scenario in which the electronic device displays a slidably displayed interface (page) in any other app. The slidably displayed interface may include: a list interface or another type of interface. This is not limited herein.

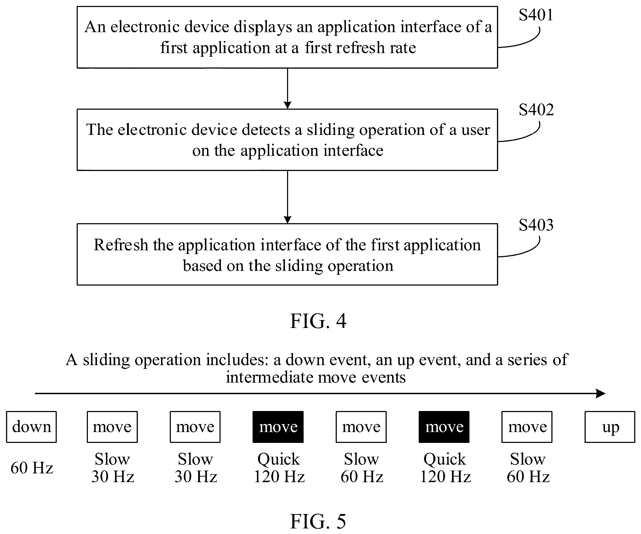

The refresh rate switching method provided in embodiments of this application is described below with reference to FIG. 4 to FIG. 10. For example, FIG. 4 is a schematic flowchart of a refresh rate switching method according to an embodiment of this application. As shown in FIG. 4, the method includes the following steps:
S401: An electronic device displays an application interface of a first application at a first refresh rate.

The first application is an application having a slidably displayed interface, such as a social application, a setting application, a news application, or a video application. None of a specific type, a name, and the like of the first application are not limited in embodiments of this application. The first refresh rate may be 10 Hz, 30 Hz, or any other value. This is not limited herein.

S402: The electronic device detects a sliding operation of a user on the application interface.

S403: Refresh the application interface of the first application based on the sliding operation.

A refresh rate of a display screen is increased when a sliding speed of the sliding operation is relatively high; and the refresh rate of the display screen is reduced when the sliding speed of the sliding operation is relatively low.

In some embodiments, the electronic device determines, based on the sliding speed of the sliding operation, a first target refresh rate corresponding to the sliding speed.

In this embodiment of this application, when the sliding speed of the sliding operation is a first speed, the application interface is refreshed and displayed by using a first value; or when the sliding speed is a second speed, the application interface is refreshed and displayed by using a second value. If the first speed is less than the second speed, the first value is less than the second value. If the first speed is greater than the second speed, the first value is greater than or equal to the second value. In some embodiments, the electronic device presets a correspondence between a speed and a refresh rate. The electronic device may determine an adjusted refresh rate based on the correspondence and the sliding speed of the sliding operation.

In some other embodiments, the electronic device presets a correspondence between a speed range and a refresh rate. The electronic device may determine an adjusted refresh rate based on the correspondence and the sliding speed of the sliding operation.

For example, the correspondence between a speed range and a refresh rate may be shown in Table 1. When the sliding speed is greater than or equal to 480 pixel/s, the refresh rate is adjusted to 120 Hz; when the sliding speed is greater than or equal to 240 pixel/s and less than 480 pixel/s, the refresh rate is adjusted to 90 Hz; when the sliding speed is greater than or equal to 90 pixel/s and less than 240 pixel/s, the refresh rate is adjusted to 6 Hz; when the sliding speed is greater than or equal to 60 pixel/s and less than 90 pixel/s, the refresh rate is adjusted to 40 Hz; and when the sliding speed is less than 60 pixel/s, the refresh rate is adjusted to 30 Hz.

**Table 1 Correspondence table**

| Speed range (pixel/s) | Refresh rate (Hz) |
|---|---|
| 480 ≤ Speed | 120 |
| 240 ≤ Speed < 480 | 90 |
| 90 ≤ Speed < 240 | 60 |
| 60 ≤ Speed < 90 | 40 |
| Speed < 60 | 30 |

It may be understood that the correspondence shown in Table 1 is merely an example, and the correspondence between a speed range and a refresh rate is not limited in embodiments of this application.

In this case, the electronic device may adjust the refresh rate in real time based on the sliding speed of the sliding operation. When the sliding speed is relatively low, refreshing and display are performed at a relatively low refresh rate, thereby reducing power consumption of the electronic device; or when the sliding speed is relatively high, refreshing and display are performed at a relatively high refresh rate, thereby improving display smoothness and user experience.

For example, FIG. 5 is a schematic diagram of a sliding operation detected by an electronic device according to an embodiment of this application. As shown in FIG. 5, when the electronic device receives the sliding operation, the electronic device displays an interface based on a speed corresponding to a move event.

Specifically, when receiving a down event, the electronic device adjusts a refresh rate to 60 Hz; or when receiving the move event, the electronic device adjusts a refresh rate based on the speed corresponding to the move event, until an up event is received. When the speed corresponding to the move event is relatively high, the refresh rate is relatively high; and when the speed corresponding to the move event is relatively low, the refresh rate is relatively low. After the up event, the electronic device adjusts the refresh rate based on a speed corresponding to the up event.

Compared with the schematic diagram of the sliding operation shown in FIG. 1A, in the schematic diagram of the sliding operation shown in FIG. 5, the electronic device may adjust the refresh rate based on a real-time speed corresponding to the sliding operation. When the speed corresponding to the move event is relatively high, the refresh rate is relatively high, thereby meeting a requirement for display smoothness; and when the speed corresponding to the move event is relatively low, the refresh rate is relatively low reduce power, thereby reducing power consumption.

Optionally, before the determining a first target refresh rate, the method further includes: detecting, by the electronic device, a plurality of move events corresponding to the sliding operation; and determining a sliding speed based on location information and time information of the plurality of move events.

In this embodiment of this application, the sliding speed of the sliding operation is a speed corresponding to a latest input event. An example in which a B^{th} input event is received at 100 ms and a (B+C)^{th} input event is received at 200 ms is used. A sliding speed of a sliding operation at 100 ms is a speed corresponding to the B^{th} input event; and a sliding speed of a sliding operation at 200 ms is a speed corresponding to the (B+C)^{th} input event.

In this embodiment of this application, the electronic device may process location information and time information of a plurality of input events, to obtain a relationship between a location and a time; and obtain, based on the relationship between a location and a time, the speed corresponding to the latest input event.

In some embodiments, the electronic device may fit times and locations of input events received within a time period, to obtain a quadratic polynomial formula (y = ax2 + bx + c), where y represents a location, and x represents a time interval to a last input event; and a speed corresponding to the last input event is b.

For example, an example in which a time period is 100 ms is used, and the electronic device receives a B^{th} input event at 100 ms, and receives a (B+C)^{th} input event at 200 ms. The electronic device may fit locations, times, and the like of the B^{th} input event to the (B+C)^{th} input event that are detected from 100 ms to 200 ms, to obtain a fitted quadratic polynomial formula (y = ax2 + bx + C), where y represents a location, and x represents a time interval to the (B+C)^{th} input event. A speed corresponding to the (B+C)^{th} input event is b.

In some other embodiments, the electronic device may fit time and locations of a preset quantity of input events, to obtain a quadratic polynomial formula (y = ax2 + bx + c), where y represents a location, and x represents a time interval to a last input event; and a speed corresponding to the last input event is b.

For example, the preset quantity is used as an example, and the electronic device receives the (B+C)^{th} input event at 200 ms. The electronic device may fit locations, time, and the like of a (B+1)^{th} input event to the (B+C)^{th} input event, to obtain the fitted quadratic polynomial formula (y = ax2 + bx + C), where y represents a location, and x represents a time interval to the (B+C)^{th} input event. A speed corresponding to the (B+C)^{th} input event is b. A process of calculating a speed corresponding to an input event is not limited in embodiments of this application.

Based on the foregoing embodiment, when the electronic device adjusts the refresh rate of the electronic device based on the sliding speed of the sliding operation, a time interval is set for any two adjustments of the refresh rate.

Optionally, that the electronic device determines the sliding speed based on the location information and the time information of the plurality of move events includes: determining, by the electronic device, the first speed based on location information and time information of M move events detected within a first time period; and determining, by the electronic device, the second speed based on location information and time information of N move events detected within a second time period, where both M and N are integers greater than a preset threshold; and a time interval between a last moment in the first time period and a last moment in the second time period is greater than preset duration. When the sliding speed of the sliding operation is a first speed, the refresh rate of the display screen is a second refresh rate; and when the sliding speed is a second speed, the refresh rate of the display screen is a third refresh rate.

The preset threshold may be 10, 5, or any value. This is not limited herein.

In this case, the refresh rate is adjusted twice at a time interval, so that a quantity of times of switching the refresh rate can be reduced, and the refresh rate can be less frequently switched.

In some embodiments, when the electronic device detects that a type of a user operation is sliding, the electronic device adjusts the refresh rate of the display screen to the second refresh rate based on a speed corresponding to a first move event. The first move event is a corresponding move event used when the electronic device detects that the user operation is a sliding operation, or a corresponding move event used after the electronic device detects that the user operation is a sliding operation.

After an adjustment is performed to preset duration of the second refresh rate, the refresh rate of the display screen is adjusted to the third refresh rate based on a speed corresponding to a second move event. The second move event is a most recent move event detected by the electronic device when the adjustment is performed to the preset duration of the second refresh rate.

In this case, the refresh rate is adjusted twice at a time interval, so that a quantity of times of switching the refresh rate can be reduced, and the refresh rate can be less frequently switched.

In some embodiments, the speed corresponding to the first move event is not a corresponding speed used before the electronic device detects that the type of the user operation is sliding. In this case, when refresh rates are different, refresh rate switching may reduce a quantity of times of the refresh rate switching and reduce freezes caused by the refresh rate switching.

In some embodiments, the electronic device may implement the preset duration by using a timer. For example, the timer is set on the electronic device after the electronic device determines the refresh rate. When the timer ends, the refresh rate is determined again.

In some other embodiments, after determining the refresh rate, the electronic device records a corresponding time used during determining of the refresh rate. If a difference between a current time and the time is less than the preset duration, no processing is performed. If a difference between a current time and the time is greater than or equal to the preset duration, the refresh rate is determined again, and the corresponding time used during determining of the refresh rate is updated. A refresh rate redetermining manner is not specifically limited in embodiments of this application.

In some embodiments, the preset duration corresponds to the second refresh rate. A higher second refresh rate indicates longer preset duration. A lower second refresh rate indicates shorter preset duration. For example, corresponding preset duration used when the second refresh rate is a first value is greater than or equal to corresponding preset duration used when the second refresh rate is a second value. The first value is greater than the second value.

In this case, the refresh rate is adjusted in a slow reducing and fast increasing manner. When the refresh rate is relatively low, the electronic device may increase the refresh rate in time, to meet a requirement for display smoothness. When the refresh rate is relatively high, the refresh rate may be slowly reduced, to reduce power consumption of the electronic device.

In this embodiment of this application, the electronic device may determine the preset duration based on the second refresh rate and a correspondence between a refresh rate and preset duration. For example, the electronic device presets the correspondence between a refresh rate and preset duration. The electronic device may determine the preset duration based on the correspondence.

For example, the correspondence between a refresh rate and preset duration may be shown in Table 2. When the refresh rate is adjusted to 120 Hz, the preset duration is 200 ms. When the refresh rate is adjusted to 90 Hz, the preset duration is 200 ms. When the refresh rate is adjusted to 60 Hz, the preset duration is 100 ms. When the refresh rate is adjusted to 40 Hz, the preset duration is 50 ms. When the refresh rate is adjusted to 30 Hz, the preset duration is 50 ms.

**Table 2 Correspondence table**

| Refresh rate (Hz) | Preset duration (ms) |
|---|---|
| 120 | 200 |
| 90 | 200 |
| 60 | 100 |
| 40 | 50 |
| 30 | 50 |

It may be understood that the correspondence shown in Table 2 is only an example, and the correspondence between a refresh rate and preset duration is not limited in embodiments of this application.

Based on the foregoing embodiment, before the detecting a sliding operation of a user on an application interface, the method further includes: displaying the application interface at a fourth refresh rate when it is detected that an input event is a down event.

The fourth refresh rate may be 60 Hz, 90 Hz, or, any value. This is not limited herein.

The fourth refresh rate is a preset refresh rate.

It may be understood that when the electronic device does not receive a user operation, a displayed interface may have a relatively low refresh rate. After the user operation is received, the fourth refresh rate is adjusted to a higher refresh rate, to facilitate subsequent display based on the user operation and improve display smoothness.

Based on the foregoing embodiment, after the sliding operation is ended, the electronic device may determine, based on a sliding speed at which the sliding operation is ended, whether to enter hand-off sliding.

Specifically, the application interface of the first application is refreshed and displayed at a fifth refresh rate when a speed corresponding to an up event corresponding to the sliding operation is greater than a second threshold. The fifth refresh rate corresponds to the speed corresponding to the up event. The application interface of the first application is refreshed and displayed at a first refresh rate when a speed corresponding to an up event corresponding to the sliding operation is less than or equal to a second threshold.

That the fifth refresh rate corresponds to the speed corresponding to the up event is that the fifth refresh rate is a first value when the speed corresponding to the up event is a third speed; or the fifth refresh rate is a second value when the speed corresponding to the up event is a fourth speed, where the third speed is less than the fourth speed, and the first value is less than or equal to the second value. In this case, a higher speed corresponding to the up event leads to a higher refresh rate, thereby meeting a requirement for display smoothness during the hand-off sliding.

The electronic device may perform processing based on location information and time information of the up event and location information and time information of A move events previous to the up event, to obtain the speed corresponding to the up event. A is any positive integer. A manner of calculating the speed corresponding to the up event is similar to a manner of calculating a speed corresponding to the move event, and details are not described herein again.

The second threshold may be may be 100 pixel/s or any other value. This is not limited in embodiments of this application.

In some embodiments, the electronic device may determine a sliding speed during hand-off sliding based on the speed corresponding to the up event and a speed curve corresponding to the hand-off sliding, and then adjust the refresh rate of the electronic device based on the sliding speed during the hand-off sliding.

In this case, the hand-off sliding is entered when the speed corresponding to the up event is relatively high; and sliding is stopped when the speed corresponding to the up event is relatively low.

Based on the foregoing embodiment, the electronic device further stores an application list. When an application corresponding to the user operation is an application in the application list, the electronic device adjusts the refresh rate based on a real-time speed of the user operation by using the foregoing method. When the application corresponding to the user operation is not an application in the application list, the electronic device performs refreshing and display at a relatively high refresh rate when receiving the user operation.

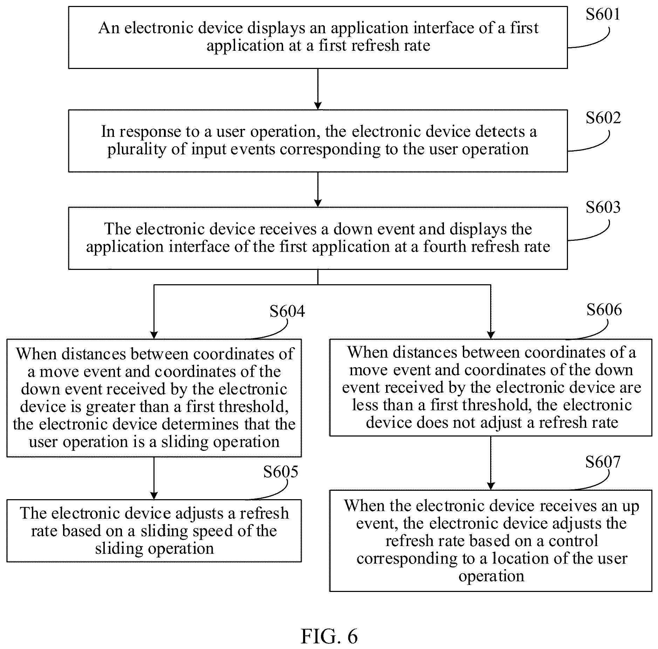

For example, FIG. 6 is a schematic flowchart of a refresh rate switching method according to an embodiment of this application. As shown in FIG. 6, the method includes the following steps:
S601: An electronic device displays an application interface of a first application at a first refresh rate.
S602: In response to a user operation, the electronic device detects a plurality of input events corresponding to the user operation.
S603: The electronic device receives a down event and displays the interface of the first application at a fourth refresh rate.
S604: When distances between coordinates of a move event and coordinates of a down event received by the electronic device is greater than a first threshold, the electronic device determines that the user operation is a sliding operation.

The distance in embodiments of this application is a distance in a sliding direction. Upward sliding and downward sliding in a vertical direction are used as an example. The distances between the coordinates of the move event and the coordinates of the down event are distances between the coordinates of the move event and the coordinates of the down event in the vertical direction. Left sliding and right sliding in a horizontal direction are used as an example. The distances between the coordinates of the move event and the coordinates of the down event are distances between the coordinates of the move event and the coordinates of the down event in the horizontal direction. The sliding direction is not specifically limited in embodiments of this application.

S605: The electronic device adjusts a refresh rate based on a sliding speed of the sliding operation.

For a specific process of performing S605, refer to the foregoing corresponding descriptions. Details are not described herein again.

S606: When distances between coordinates of a move event and coordinates of a down event received by the electronic device are less than a first threshold, the electronic device does not adjust a refresh rate.

S607: When the electronic device receives an up event, the electronic device adjusts the refresh rate based on a control corresponding to a location of the user operation.

When the electronic device receives the up event, the distances between the coordinates of the move event and the coordinates of the down event are both less than the first threshold, and the electronic device adjusts the refresh rate based on the control corresponding to the location of the user operation.

In this case, after receiving the sliding operation, the electronic device may adjust the refresh rate based on the sliding speed of the sliding operation, thereby reducing power consumption of the electronic device. The refresh rate is not adjusted when a click operation is received, thereby reducing power consumption of the electronic device.

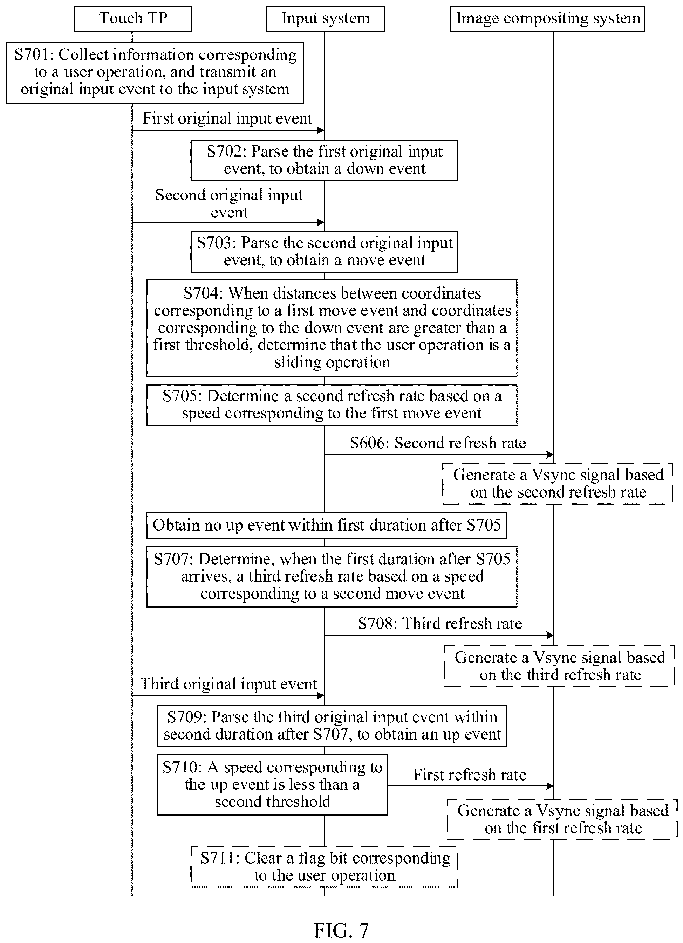

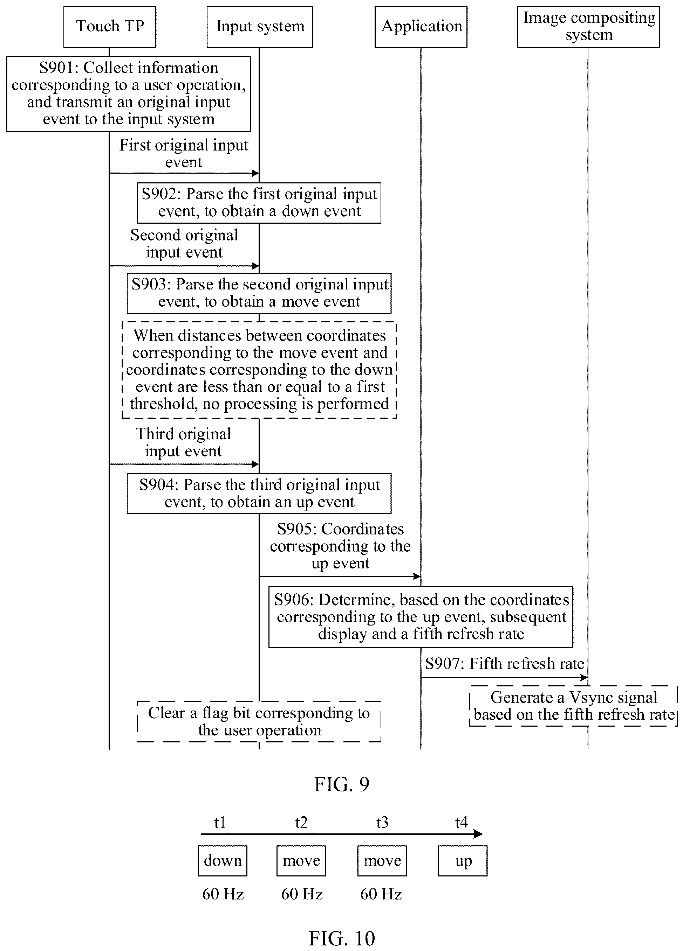

The following describes, with reference to FIG. 7 to FIG. 10, a procedure of an interaction between internal modules of an electronic device in different user operations. FIG. 7 to FIG. 8B are an interaction procedure corresponding to a sliding operation. FIG. 9 and FIG. 10 are an interaction procedure corresponding to a click operation.

For example, FIG. 7 is a schematic diagram of an interaction between internal modules in a sliding operation scenario according to an embodiment of this application. An example in which an electronic device includes a touch panel (TP), an input system, and an image compositing system is used. As shown in FIG. 7, a refresh rate switching procedure includes: receiving, by the electronic device, a user operation when displaying a list interface at a first refresh rate.

S701: The touch panel (TP) collects information corresponding to the user operation, and transmits an original input event to the input system. The original input event includes information such as touch coordinates, touch strength, and a timestamp of a touch operation.

A frequency at which the touch panel (TP) collects the information corresponding to the user operation may be referred to as a touch sampling rate. The touch sampling rate may be a preset sampling frequency. The touch panel (TP) transmits the original input event to the input system at the touch sampling rate. The touch sampling rate may be 300 times/second, 120 times/second, or any other value. This is not limited in embodiments of this application.

S702: When receiving (detecting) a first original input event, the input system parses the first original input event, to obtain a down event.

In some embodiments, after obtaining the down event, the input system clears a related parameter corresponding to a previous user operation, and/or configures a related flag bit. In this case, interference from the parameter of the previous operation can be avoided, and mistaken recognition on a current operation can be reduced.

The related flag bit includes but is not limited to: a flag bit used for indicating an operation type or a flag bit used for indicating a current refresh rate; or a flag bit used for determining a refresh rate adjustment, or the like.

For example, the flag bit used for indicating an operation type includes: click click or sliding move. The flag bit used for indicating a current refresh rate includes: boost. The flag bit used for indicating a refresh rate adjustment includes: first checked or a last check time. The first checked is used for indicating whether to perform refresh rate switching for the first time. The last check time is used to indicate a time of last refresh rate switching.

In some embodiments, the boost is used to indicate that the current refresh rate is relatively high or low. For example, boost = false is used to indicate that the current refresh rate is relatively low; and boost = true is used for indicating that the current refresh rate is relatively high. In some other embodiments, the boost is used to indicate a specific value of the current refresh rate. For example, boost = 60 is used to indicate that the current refresh rate is 60 Hz; and boost = 90 is used for indicating that the current refresh rate is 90 Hz. This is not limited in embodiments of this application.

Because the input system cannot distinguish between a click operation and a sliding operation when detecting the down event, the electronic device defaults that the type of the user operation is a click operation. Values corresponding to flag bits are respectively: click = true; move = false; boost = false; first checked = false; and last check time = 0.

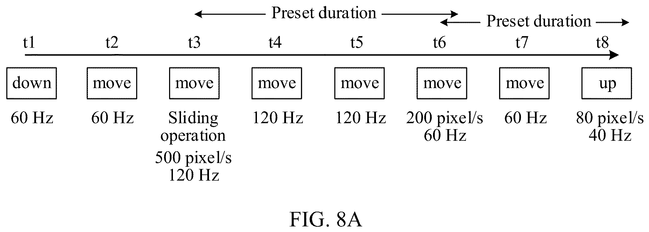

For example, a schematic diagram corresponding to a sliding operation shown in FIG. 8A is used as an example, the electronic device receives a down event at a moment t1, and values corresponding to flag bits are respectively: click = true; move = false; boost = false; first checked = false; and last check time = 0.

In some embodiments, when obtaining the down event, the input system transmits, to the image compositing system, a message used to indicate a fourth refresh rate. Adaptively, the image compositing system controls the electronic device to switch from the first refresh rate to the fourth refresh rate.

S703: When receiving a second original input event, the input system parses the second original input event to obtain a move event.

S704: When distances between coordinates corresponding to the move event and coordinates corresponding to the down event are greater than a first threshold, the input system determines that the user operation is a sliding operation.

The first threshold may be 24 pixels, 30 pixels, or any other value. A specific value of the first threshold is not limited in embodiments of this application.

It may be understood that when the distances between the coordinates corresponding to the move event and the coordinates corresponding to the down event are less than or equal to the first threshold, the values corresponding to the flag bits remain unchanged.

After the input system determines that the user operation is the sliding operation, the values corresponding to the flag bits are: click = false; move = true; boost = false; first checked = false; and last check time = 0.

For example, a schematic diagram corresponding to a sliding operation shown in FIG. 8A is used as an example, and the electronic device receives a down event at a moment t1, and receives a move event after the moment t1. Coordinates corresponding to a move event received at a moment t2 are less than or equal to the first threshold, and the electronic device determines, at the moment t2, that the user operation is a click operation. Values corresponding to the flag bits remain unchanged: click = true; move = false; boost = false; first checked = false; and last check time = 0.

Distances between coordinates corresponding to a move event and coordinates corresponding to a down event received at a moment t3 is greater than a first threshold, and the electronic determines, at the moment t3, that the user operation is a sliding operation. The flag bit used for indicating an operation type changes, for example, click = false; and move = true.

S705: After determining that the user operation is a sliding operation, the input system determines a second refresh rate based on a speed corresponding to a first move event.

Adaptively, after the input system determines the second refresh rate, values corresponding to the flag bits are respectively: click = false; move = true; boost = true; first checked = true; and last check time = a time corresponding to the first move event.

In this embodiment of this application, the first move event may be a corresponding move event used when it is determined that the user operation is a sliding operation, or may be a move event detected after it is determined that the user operation is a sliding operation.

In a possible implementation 1, the electronic device calculates a speed corresponding to the corresponding move event used when it is determined that the user operation is a sliding operation, and calculates a speed corresponding to the corresponding move event detected after the user operation is a sliding operation, until a refresh rate corresponding to the speed corresponding to the move event is different from the first refresh rate.

For example, a schematic diagram corresponding to a sliding operation shown in FIG. 8A is used as an example, and before the moment t3, a refresh rate of the electronic device is 60 Hz. The electronic device determines, at the moment t3, that the user operation is a sliding operation. The electronic device calculates that a speed corresponding to a move event received at the moment t3 is 500 pixels/s, and determines, based on the speed corresponding to the move event, that the refresh rate is 120 Hz.

Correspondingly, the flag bit used for indicating a current refresh rate and the flag bit used for indicating a refresh rate adjustment change. For example, boost = true; first checked = true; and last check time = t3.

It may be understood that if the electronic device calculates that the speed corresponding to the move event received at the moment t3 is 200 pixels/s, the refresh rate determined based on the move event at the moment t3 is 60 Hz. In this case, the electronic device calculates a speed corresponding to a move event received at a moment t4, until it is determined, based on the speed corresponding to the move event, that the refresh rate is not 60 Hz.

In a possible implementation 2, the electronic device adjusts the refresh rate based on a speed corresponding to the corresponding move event used when it is determined that the user operation is a sliding operation.

For example, a schematic diagram corresponding to a sliding operation shown in FIG. 8A is used as an example. The electronic device determines, at the moment t3, that the user operation is the sliding operation. The electronic device calculates that the speed corresponding to the move event received at the moment t3 is 500 pixels/s, and determines, based on the speed corresponding to the move event, that the refresh rate is 120 Hz.

In a possible implementation 3, the electronic device adjusts the refresh rate based on a speed corresponding to the corresponding move event detected after it is determined that the user operation is the sliding operation.

For example, a schematic diagram corresponding to a sliding operation shown in FIG. 8A is used as an example. The electronic device determines, at the moment t3, that the user operation is the sliding operation. The electronic device calculates the speed corresponding to the move event received at the moment t4, and determines the refresh rate based on the speed.

S706: The input system transmits, to the image compositing system, a message used to indicate a second refresh rate.

Adaptively, the image compositing system controls the refresh rate of the electronic device to be the second refresh rate.

In some embodiments, the image compositing system generates a Vsync signal based on period duration corresponding to the second refresh rate, to control time intervals of procedures, such as drawing, rendering, compositing, and display.

S707: The input system determines, when the first duration after S605 arrives, a third refresh rate based on a speed corresponding to a second move event. The first duration corresponds to the second refresh rate.

It may be understood that after the input system determines the second refresh rate, values corresponding to the flag bits are respectively: click = false; move = true; boost = true; first checked = true; and last check time = a time corresponding to the second move event.

For a correspondence between a second refresh rate and first duration, refer to the foregoing corresponding descriptions. Details are not described herein again.

The second move event is a move event closest to the obtained first duration after S705 before the first duration after S705, or may be understood as a latest move event.

For example, a schematic diagram corresponding to a sliding operation shown in FIG. 8A is used as an example. The electronic device adjusts the refresh rate to 120 Hz at the moment t3, and when preset duration at the moment t3 arrives, the second move event is a move event detected by the electronic device at a moment t6. The electronic device calculates that a speed corresponding to the move event at the moment t6 is 200 pixels/s, and determines, based on the speed corresponding to the move event at the moment t6, that the refresh rate is 60 Hz.

Correspondingly, the flag bit used for indicating a current refresh rate and the flag bit used for indicating a refresh rate adjustment change. For example, boost = false; first checked = true; and last check time = t6.

S708: The input system transmits, to the image compositing system, a message used to indicate a third refresh rate.

Adaptively, the image compositing system controls the electronic device to switch from the second refresh rate to the third refresh rate.

In some embodiments, the image compositing system generates a Vsync signal based on period duration corresponding to the third refresh rate, to control time intervals of procedures, such as drawing, rendering, compositing, and display.

It should be noted that, if the second refresh rate is the same as the third refresh rate, the electronic device may not perform S708, or may not perform 7608.

In some embodiments, the image compositing system generates a Vsync signal based on the third refresh rate.

S709: The input system parses a third original input event within second duration after S707, and detects an up event.

For example, a schematic diagram corresponding to a sliding operation shown in FIG. 8A is used as an example. The electronic device adjusts the refresh rate to 60 Hz, detects an up event before preset duration at a moment t6 arrives, and calculates a speed corresponding to the up event.

S710: When the speed corresponding to the up event is less than a second threshold, the input system transmits, to the image compositing system, a message used to indicate the first refresh rate.

Adaptively, the image compositing system controls the electronic device to switch from the third refresh rate to the first refresh rate.

S711: After obtaining the up event, the input system clears a related parameter corresponding to the user operation.

The related parameter includes, but is not limited to: the foregoing flag bits, the coordinates corresponding to the down event, the coordinates corresponding to the move event, coordinates corresponding to the up event, and the like.

It may be understood that, when the speed corresponding to the up event is greater than or equal to the second threshold, subsequently, the electronic device determines a fifth refresh rate based on a speed curve and the speed corresponding to the up event.

For example, an example in which the speed corresponding to the up event is 80 pixels/s is used, and the fifth refresh rate is 40 Hz. For a relationship between a speed and a fifth refresh rate, refer to the foregoing corresponding descriptions. Details are not described herein again.

In this case, the electronic device may adjust the refresh rate of the electronic device based on the move event, and when a sliding speed corresponding to the sliding operation is relatively low, the refresh rate is reduced, thereby reducing power consumption. When the sliding speed corresponding to the sliding operation is relatively high, the refresh rate is increased, thereby meeting sliding and display smoothness, and improving user experience. In addition, clearing the corresponding mark in S711 can reduce interference to subsequent user operation determining, and reduce a risk of mistaken recognition.

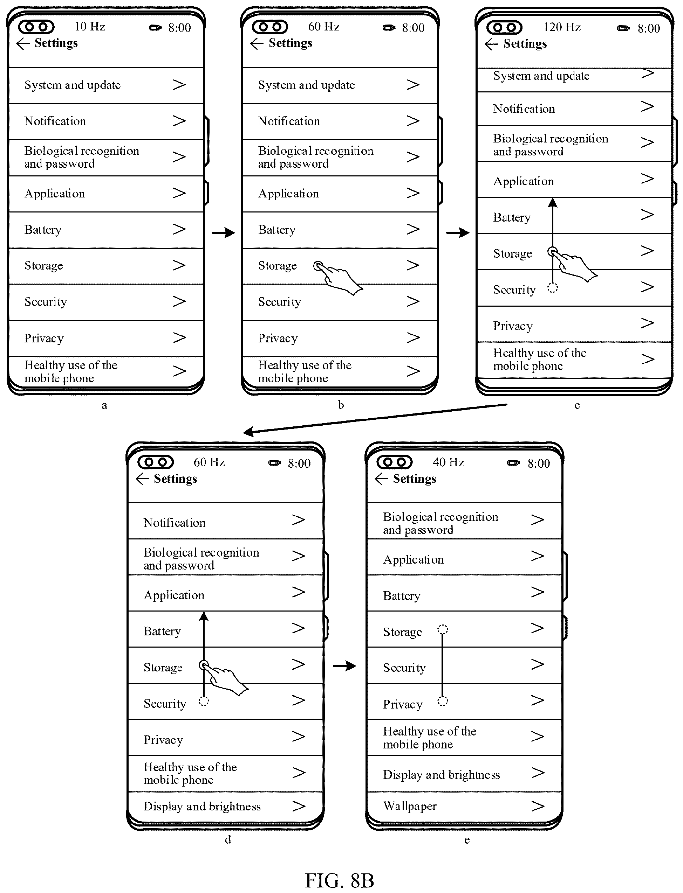

For example, FIG. 8B is a schematic diagram of an interface corresponding to a sliding operation shown in FIG. 8A according to an embodiment of this application. An example in which an electronic device receives a sliding operation of a user when displaying a setting interface is used.

An interface shown in a in FIG. 8B is the setting interface. Before a moment t1, the electronic device refreshes and displays the setting interface at a rate of 10 Hz when not receiving a user operation.

At the moment t1, the electronic device detects a down event corresponding to the sliding operation of the user, and the electronic device adjusts a refresh rate of a display screen to 60 Hz. After the moment t1, the display screen refreshes and displays the setting interface at the rate of 60 Hz (as shown in b in FIG. 8B).

During a period from the moment t1 to a moment t3, the display screen refreshes and displays the setting interface at the rate of 60 Hz.

At the moment t3, the electronic device determines that a type of the user operation is sliding, and starts to calculate a speed corresponding to a move event. The speed that corresponds to the move event and that is calculated by the electronic device is 500 pixels/s, and the refresh rate of the display screen is adjusted to 120 Hz.

After the moment t3, the display screen refreshes and displays the setting interface at the rate of 120 Hz (as shown in c in FIG. 8B).

During a period from the moment t3 to a moment t6, the display screen refreshes and displays the setting interface at the rate of 120 Hz.

At the moment t6, the preset duration arrives, the speed that corresponds to the move event and that is obtained by the electronic device is 200 pixels/s, and the refresh rate of the display screen is adjusted to 60 Hz.

After the moment t6, the display screen refreshes the display setting interface (as shown in d in FIG. 8B) at the rate of 60 Hz.

During a period from the moment t6 to a moment t8, the display screen refreshes and displays the setting interface at the rate of 60 Hz.

At the moment t8, the electronic device detects an up event corresponding to the sliding operation of the user, obtains that a speed corresponding to the up event is 80 pixels/s that is greater than a speed threshold, and adjusts the refresh rate of the display screen to 40 Hz (as shown in e in FIG. 8B). The speed threshold may be the second threshold.

Subsequently, the terminal device performs display based on a hand-off sliding procedure, and adjusts the refresh rate. The foregoing embodiment describes switching of the refresh rate in the sliding scenario. The method provided in embodiments of this application may further be applied to a scenario corresponding to the click operation.

For example, FIG. 9 is a schematic diagram of an interaction between internal modules according to an embodiment of this application. An example in which an electronic device includes a touch panel (TP), an input system, an image compositing system, and an application is used as an example. As shown in FIG. 9, a refresh rate switching procedure includes: receiving, by the electronic device, a user operation when displaying a list interface at a first refresh rate.

S901: The touch panel (TP) collects information corresponding to the user operation, and transmits an original input event to the input system. The original input event includes information such as touch coordinates, touch strength, and a timestamp of a touch operation.

S902: When receiving (detecting) a first original input event, the input system parses the first original input event, to obtain a down event.

In some embodiments, after obtaining the down event, the input system clears a related parameter corresponding to a previous user operation, and/or configures a related flag bit.

For related flag bits, refer to the foregoing corresponding descriptions. Details are not described herein again. Because the input system cannot distinguish between a click operation and a sliding operation when detecting the down event, the electronic device defaults that a type of the user operation is a click operation. Values corresponding to the flag bits are respectively: click = true; move = false; boost = false; first checked = false; and last check time = 0.

In some embodiments, when obtaining the down event, the input system transmits, to the image compositing system, a message used to indicate a fourth refresh rate. Adaptively, the image compositing system controls the electronic device to switch from the first refresh rate to the fourth refresh rate.

S903: When receiving a second original input event, the input system parses the second original input event to obtain a move event.

When the distances between the coordinates corresponding to the move event and the coordinates corresponding to the down event are less than or equal to the first threshold, the input system performs no processing, and the values corresponding to the flag bits remain unchanged. For the first threshold, refer to the foregoing related descriptions. Details are not described herein again.

For example, a schematic diagram corresponding to a sliding operation shown in FIG. 10 is used as an example, and the electronic device receives a down event at a moment t1, and receives a move event after the moment t1. Coordinates corresponding to a move event received at a moment t2 are less than or equal to the first threshold, and the electronic device determines, at the moment t2, that the user operation is a click operation. Values corresponding to the flag bits remain unchanged: click = true; move = false; boost = false; first checked = false; and last check time = 0.

S904: When receiving a third original input event, the input system parses the third original input event, to obtain an up event.

It may be understood that, because distances between coordinates corresponding to the move event and coordinates corresponding to the down event are less than a first threshold, the user operation is a sliding operation. After the up event, the values corresponding to the flag bits are respectively: click = true; move = false; boost = false; first check = false; and last check time = 0.

For example, a schematic diagram corresponding to a sliding operation shown in FIG. 10 is used as an example, and the electronic device receives a down event at a moment t1, and receives a move event after the moment t1. Distances between coordinates corresponding to each of a move event received at a moment t2 and a move event received at a moment t3 and coordinates corresponding to a down event are less than or equal to a first threshold, and the electronic determines, at the moment moments t2 and t3, that the user operation is a click operation, and a refresh rate is not switched. After a moment t4, the up event is received. The electronic device determines that the user operation is a click operation, and does not switch the refresh rate.

S905: The input system transmits, to the application, a message used to indicate a click operation, where the message includes: coordinates corresponding to the up event.

S906: The application determines, based on the coordinates corresponding to the up event, a fifth refresh rate corresponding to subsequent display.

An example in which the coordinates corresponding to the up event are used to indicate video playback is used, and the fifth refresh rate may be 60 Hz. An example in which the coordinates corresponding to the up event are used to indicate to enter a game application is used, and the fifth refresh rate may be 120 Hz. An example in which the coordinates corresponding to the up event are used to indicate to exit a game application is used, and the fifth refresh rate may be 90 Hz. The fifth refresh rate determined by the application is not limited in embodiments of this application.

S907: The application transmits, to the image compositing system, a message used to indicate a fifth refresh rate.

Adaptively, the image compositing system controls the electronic device to switch from the first refresh rate to the fifth refresh rate.

In some embodiments, the image compositing system generates a Vsync signal based on period duration corresponding to the fifth refresh rate, to control time intervals of procedures, such as drawing, rendering, compositing, and display.

It should be noted that if the first refresh rate is the same as the fifth refresh rate, the electronic device may perform S907, or may not perform S907.

In this case, the electronic device remains a relatively low refresh rate when receiving a click operation, thereby reducing power consumption. After the click operation, subsequent display and the refresh rate are determined based on a location corresponding to the click operation.

The method provided in embodiments of this application is described above. An apparatus provided in an embodiment of this application for performing the foregoing method is described below. A person skilled in the art may understand that the method and the apparatus may be combined and mutual reference may be made, and that a related apparatus provided in an embodiment of this application may perform the steps in the foregoing method.

The refresh rate switching method provided in the embodiments of this application may be applied to an electronic device having a display function. The electronic device includes an electronic device. For a specific device form and the like of the electronic device, refer to the foregoing related descriptions. Details are not described herein again.

An embodiment of this application provides an electronic device. The electronic device includes: a processor and a memory, where the memory stores computer-executable instructions; and the processor executes the computer-executable instructions stored in the memory, so that the electronic device performs the foregoing method.

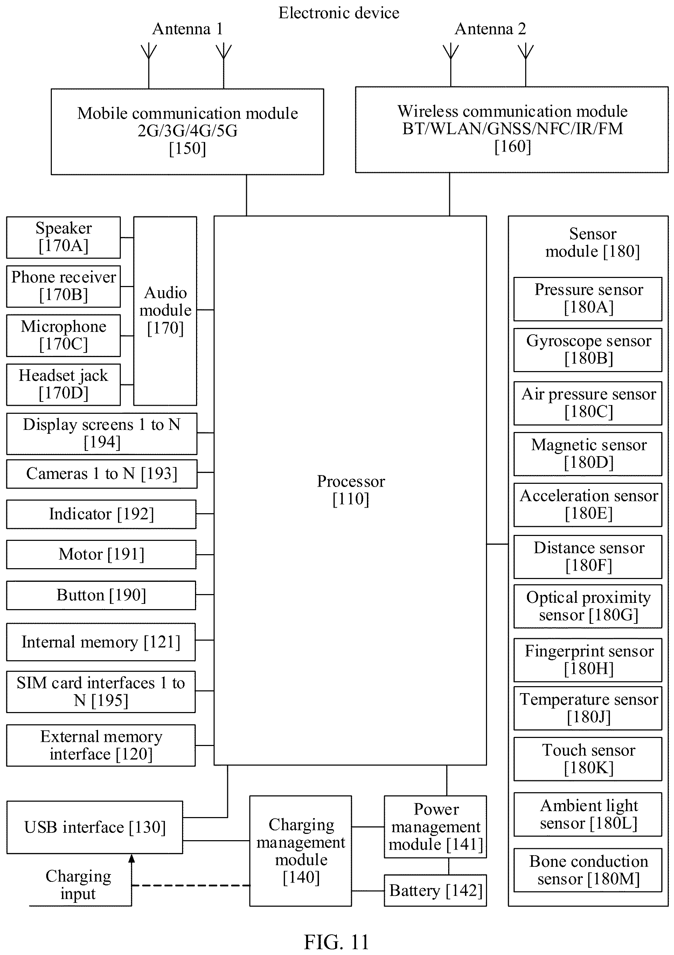

For example, FIG. 11 is a schematic diagram of a structure of an electronic device according to an embodiment of this application. As shown in FIG. 11, the electronic device includes: the electronic device may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the electronic device. In some other embodiments of this application, the electronic device may include more or fewer components than those shown in the figure, some components may be combined, some components may be split, or different arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated to one or more processors.

The controller may generate an operation control signal based on instruction operation code and a sequence signal, and control obtaining and executing of instructions.

A memory may further be disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor may directly invoke the instructions or the data from the memory. This avoids repeated access, and reduces a waiting time of the processor 110, so that system efficiency is increased.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between the modules shown in this embodiment of the present invention is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

In addition, the device further runs an operating system on the foregoing components, for example, an iOS operating system, an Android (android) operating system, or a Windows operating system. An application program may be installed and run in the operating system.

A software system of the electronic device may use a layered architecture, an event-driven architecture, a microkernel architecture, a micro service architecture, a cloud architecture, or the like. Details are not described herein again.

An embodiment of this application provides a chip. The chip includes a processor, and the processor is configured to invoke a computer program in a memory, to perform the technical solutions in the foregoing embodiments. Their implementation principles and technical effects are similar those in the related embodiments, and details are not described herein again.

An embodiment of this application further provides a computer-readable storage medium. The computer-readable storage medium stores a computer program. When the computer program is executed by a processor, the foregoing method is implemented.

The method described in the foregoing embodiments may be fully or partially implemented by software, hardware, firmware, or any combination thereof. If implemented in software, a function may be stored on or transmitted on a computer readable medium as one or more instructions or code. The computer-readable medium may include a computer storage medium and a communication medium, and may further include any medium that can transmit a computer program from one place to another. The storage medium may be any target medium accessible to a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. Moreover, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer-readable medium.

An embodiment of this application provides a computer program product. The computer program product includes a computer program. The computer program, when run, enables a computer to perform the foregoing method.

The embodiments of this application are described with reference to the flowcharts and/or block diagrams of the method, the device (system), and the computer program product according to the embodiments of this application. It should be understood that computer program instructions can implement each procedure and/or block in the flowcharts and/or block diagrams and a combination of procedures and/or blocks in the flowcharts and/or block diagrams. These computer program instructions may be provided for a general-purpose computer, a dedicated computer, an embedded processor, or a processing unit of any other programmable device to generate a machine, so that the instructions executed by a computer or a processing unit of any other programmable data processing device generate an apparatus for implementing a specific function in one or more processes in the flowcharts and/or in one or more blocks in the block diagrams.

It should be noted that the user information (including, but not limited to, user equipment information, user personal information, and the like) and data (including, but not limited to, data for analysis, stored data, displayed data, and the like) involved in this application all are information and data authorized by the user or fully authorized by each party. The collection, use, and processing of relevant data need to comply with relevant laws and regulations, and corresponding operation portals are provided for the user to choose to authorize or refuse.

The foregoing specific implementations further describe the objectives, technical solutions, and beneficial effects of the present invention in detail. It should be understood that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A refresh rate switching method, wherein the method is applied to an electronic device, the electronic device comprises a display screen, a first application is installed, and the method comprises:
displaying an application interface of the first application at a first refresh rate;
detecting a sliding operation of a user on the application interface; and
refreshing the application interface of the first application based on the sliding operation, wherein
when a sliding speed of the sliding operation is a first speed, a refresh rate of the display screen is a second refresh rate; or when a sliding speed is a second speed, a refresh rate of the display screen is a third refresh rate; and
the first speed is less than the second speed, and the second refresh rate is less than or equal to the third refresh rate.

2. The method according to claim 1, wherein the refreshing the application interface of the first application based on the sliding operation comprises:
determining, based on the sliding speed, a first target refresh rate corresponding to the sliding speed; and
refreshing, by the display screen, the application interface of the first application at the first target refresh rate.

3. The method according to claim 2, wherein before the determining a first target refresh rate, the method further comprises:
detecting a plurality of move events corresponding to the sliding operation; and
determining the sliding speed based on location information and time information of the plurality of move events.

4. The method according to claim 3, wherein the determining the sliding speed based on location information and time information of the plurality of move events comprises:
determining the first speed based on location information and time information of M move events detected within a first time period; and
determining the second speed based on location information and time information of N move events detected within a second time period, wherein
both M and N are integers greater than a preset threshold; and a time interval between a last moment in the first time period and a last moment in the second time period is greater than preset duration.

5. The method according to claim 4, wherein
the preset duration is first duration when the second refresh rate is a first value; or
the preset duration is second duration when the second refresh rate is a second value, wherein
the first value is greater than the second value, and the first duration is greater than the second duration.

6. The method according to any one of claims 1 to 5, wherein the method further comprises:
displaying the application interface of the first application at a fourth refresh rate when a down event corresponding to the sliding operation is detected.

7. The method according to any one of claims 1 to 6, wherein the method further comprises:
detecting an up event corresponding to the sliding operation;
determining a second target refresh rate based on a speed corresponding to the up event; and
refreshing, by the display screen, the application interface of the first application at the second target refresh rate.

8. The method according to claim 7, wherein the method further comprises:
refreshing and displaying, by the display screen, the application interface of the first application at the first refresh rate when the speed corresponding to the up event is less than or equal to a speed threshold; or
refreshing and displaying, by the display screen, the application interface of the first application at a fifth refresh rate when the speed corresponding to the up event is greater than a speed threshold, wherein the fifth refresh rate corresponds to the speed corresponding to the up event.

9. A refresh rate switching method, wherein the method is applied to an electronic device, the electronic device comprises a display screen, a first application is installed, and the method comprises:
displaying an application interface of the first application at a first refresh rate;
detecting a sliding operation of a user on the application interface;
when a down event corresponding to the sliding operation is detected, switching a refresh rate of the display screen from the first refresh rate to a second refresh rate, and displaying the application interface of the first application at the second refresh rate;
when it is detected that a sliding speed corresponding to the sliding operation is a first speed, switching a refresh rate of the display screen from the second refresh rate to a third refresh rate, and displaying the application interface of the first application at the third refresh rate;
when it is detected that the sliding speed is a second speed, switching the refresh rate of the display screen from the third refresh rate to a fourth refresh rate, and displaying the application interface of the first application at the fourth refresh rate, wherein when the first speed is less than the second speed, the third refresh rate is less than the fourth refresh rate, or when the first speed is greater than the second speed, the third refresh rate is greater than the fourth refresh rate; and
when an up event corresponding to the sliding operation is detected, switching the refresh rate of the display screen from the fourth refresh rate to a fifth refresh rate, and displaying the application interface of the first application at the fifth refresh rate.

10. The method according to claim 9, wherein a speed corresponding to the up event is less than or equal to a speed threshold, and the fifth refresh rate is the same as the first refresh rate.

11. The method according to claim 9, wherein a speed corresponding to the up event is greater than a speed threshold; and
the fifth refresh rate is a first value when the speed corresponding to the up event is a third speed; or
the fifth refresh rate is a second value when the speed corresponding to the up event is a fourth speed, wherein
the third speed is less than the fourth speed, and the first value is less than or equal to the second value.

12. The method according to any one of claims 9 to 11, wherein the sliding operation corresponds to a plurality of move events, and the method further comprises:
determining, based on location information and time information that correspond to a first move event, and location information and time information that correspond to a move event previous to the first move event, that the speed of the sliding operation is the first speed, wherein
the first move event is a corresponding move event used when it is detected that a type of the sliding operation is sliding, or a move event used after it is detected that a type of the sliding operation is sliding.

13. The method according to claim 12, wherein the method further comprises:
determining, based on location information and time information that correspond to a second move event, and location information and time information that correspond to a move event previous to the second move event, that the speed of the sliding operation is the second speed, wherein
a time interval between the second move event and the first move event is greater than preset duration.

14. The method according to any one of claims 9 to 13, wherein
the preset duration is first duration when the third refresh rate is a first value; or
the preset duration is second duration when the third refresh rate is a second value, wherein
the first value is greater than the second value, and the first duration is greater than the second duration.

15. The method according to any one of claims 9 to 14, wherein
the first refresh rate is 10 Hz, the second refresh rate is 60 Hz, the third refresh rate is 120 Hz, the fourth refresh rate is 60 Hz, and the fifth refresh rate is 40 Hz.

16. An electronic device, comprising: a processor and a memory, wherein
the memory stores computer-executable instructions; and
the processor executes the computer-executable instructions stored in the memory, to enable the electronic device to perform the method according to any one of claims 1 to 8 or the method according to any one of claims 9 to 15.

17. A computer-readable storage medium, wherein the computer-readable storage medium stores a computer program; and the computer program, when executed by a processor, implements the method according to any one of claims 1 to 8, or implements the method according to any one of claims 9 to 15.

18. A computer program product, comprising a computer program, wherein the computer program, when run, enables a computer to perform the method according to any one of claims 1 to 8 or the method according to any one of claims 9 to 15.
